# FASCICULE DE BREVET EUROPEEN

(11) **EP 1 335 884 B1**
(45) Date de publication et mention de la délivrance du brevet: **21.04.2004**
(21) Numéro de dépôt: 01978023.8
(22) Date de dépôt: 23.10.2001
(51) Int. Cl.: C03B 33/095

(54) **PROCEDE ET INSTALLATION POUR LA DECOUPE DE PIECES EN VERRE**
VERFAHREN UND VORRICHTUNG ZUM TRENNEN VON GLASGEGENSTÄNDEN
METHOD AND INSTALLATION FOR CUTTING OUT GLASS PIECES

(30) Priorité: 24.10.2000 BE 200000676
(43) Date de publication de la demande: 20.08.2003
(73) Titulaire: Cuvelier, Georges, 7110 Houdeng-Goegnies (BE)
(72) Inventeur: Cuvelier, Georges, 7110 Houdeng-Goegnies (BE)
(74) Mandataire: Schmitz, Yvon
(86) Numéro de dépôt international: PCT/BE2001/000185
(87) Numéro de publication internationale: WO 2002/034682

(56) Documents cités:
- WO-A-98/56722
- DE-A- 4 411 037
- US-B1- 6 211 488

## Description

La présente invention concerne un procédé et une installation pour la découpe de pièces en verre.

Ce procédé et cette installation peuvent être utilisés aussi bien dans l'industrie du verre plat que dans l'industrie du verre creux mais seront décrits plus en détail pour leur application au verre creux.

La fabrication d'objets en verre creux tels que verres à boire, vases, etc., comporte généralement une opération appelée "décalottage".

Le décalottage est une opération par laquelle on sépare de la partie de verre constituant la pièce en verre finale proprement dite, une masse de verre ne constituant pas la pièce en verre finale proprement dite, mais résultant du processus de formage à chaud; il s'agit en général de la partie par laquelle a été tenue la masse de verre initialement destinée à constituer la pièce en verre lors des opérations de pressage ou de soufflage qui ont été réalisées alors que le verre se trouvait à l'état pâteux afin de lui donner la forme recherchée correspondant à celle de la pièce en verre. Cette partie de la pièce en verre ne constituant pas l'article final proprement dit est en général appelée "calotte".

Le décalottage peut être réalisé par un procédé à chaud ou un procédé à froid.

Lors du décalottage à chaud, le verre est porté, dans le voisinage de la zone où doit se produire le décalottage, à une température supérieure au point de ramollissement, où il redevient malléable : la séparation se produit en éloignant suffisamment les deux parties de verre à séparer; lorsque les deux masses de verre se séparent, les tensions superficielles agissent pour constituer un bord épais et arrondi. Ce procédé est en général réservé aux articles de basse facture.

Lors du décalottage à froid, le verre est porté, dans le voisinage de la zone où doit se produire le décalottage, à une température inférieure à celle du cas du décalottage à chaud; le verre reste dans le domaine fragile et ce réchauffage n'a pour but que d'introduire des tensions mécaniques qui, en se libérant, par exemple, sous l'effet du contact avec un objet métallique froid ou sous l'effet d'un jet d'air froid, vont induire une fissure qui, en se propageant dans le matériau fragile, vont provoquer le décalottage. Dans le cas du décalottage à froid, il est fréquent que le procédé mis en oeuvre comporte une phase de traçage qui a pour but de générer à la surface de l'article en verre, par l'action mécanique d'un outil plus dur que le verre, un défaut de surface que l'on peut assimiler à une griffe, et qui va servir à guider la propagation de la fissure au moment où elle se produit brutalement. Le résultat de ce procédé est un bord mince mais coupant qui devra, pour posséder les propriétés nécessaires à la pièce en verre finie, subir diverses opérations de polissage à l'aide d'outils abrasifs, en général appelées flettage, de chanfreinage, de polissage au feu, et même de trempe afin de lui donner une résistance mécanique suffisante. Le résultat final est un bord mince et suffisamment résistant. L'opération de décalottage à froid est plus complexe à réaliser que le décalottage à chaud et est réservée aux pièces en verre de facture plus élevée.

L'opération de flettage est décrite notamment dans le document BE-A-670 504.

La réalisation dans les meilleures conditions possibles de l'opération de décalottage à froid permet d'obtenir un bord aussi proche que possible de sa forme finale, comportant aussi peu de défauts que possible de telle sorte que l'opération de flettage est réalisée aisément, sans requérir d'enlèvement de matière important.

L'opération de décalottage à froid par les procédés classiques ne donnent pas toujours de bons résultats ou des résultats insuffisamment reproductibles sur des pièces en verre présentant des formes particulières, comme par exemples les verres évasés ou les verres sensiblement cylindriques mais à section polygonale. Les appareils mécaniques utilisés pour réaliser le traçage à l'aide de pointe diamantée, de pointe ou de molette en carbure ou en matériau céramique, doivent permettre une multitude de réglages pour pouvoir s'adapter aux différentes géométries des verres à traiter; dans tous les cas, ils nécessitent une maintenance suivie et l'intervention, à chaque changement de production, d'un personnel spécialisé.

Depuis quelques temps, des procédés, s'apparentant au procédé de décalottage à froid, utilisant un ou plusieurs faisceaux de rayons laser pour chauffer le matériau et y générer les défauts nécessaires équivalents à la grille de l'outil, ont été proposés.

Par la demande de brevet WO-A-98/56722, on connaît un procédé de décalottage de pièces en verre, ce procédé comprenant deux étapes successives :
dans une première étape, on soumet une pièce à décalotter en rotation à l'action d'un faisceau de rayons lasers continu ou à des faisceaux de rayons laser continus;
dans une deuxième étape, pendant sensiblement une rotation de la pièce à décalotter ou pendant au moins une rotation de la pièce à décalotter, on soumet la zone qui a été soumise dans la première étape à l'action d'un ou de faisceaux de rayons laser continus, à l'action d'au moins un faisceau de rayons laser pulsé focalisé de manière à former une série de points successifs distants l'un de l'autre, ladite série définissant une ligne sensiblement continue le long de laquelle s'effectue sensiblement le décalottage. Le résultat est un bord décalotté très régulier, quasi plan, excepté des irrégularités de faible amplitude, facilement éliminable par un flettage léger, peu coûteux et facile à réaliser; le procédé permet d'obtenir ce bord régulier de façon très reproductible. De plus, pour certaines pièces en verre, en particulier pour les pièces de forme simple, par exemple cylindriques ou sensiblement cylindriques, et pour des pièces en verre d'épaisseur de paroi généralement inférieure à 2 mm, ce procédé permet d'obtenir un bord décalotté apte à être traité directement dans une station de rebrûlage, sans avoir à être fletté au préalable.

Le procédé décrit dans la demande de brevet WO-A-98/56722 a pour principal inconvénient de nécessiter l'utilisation d'au moins deux faisceaux de rayons laser distincts, de nature différente : un faisceau de rayons laser continu et un faisceau de rayons laser pulsé, ce qui complique l'installation mettant en oeuvre le procédé et augmente son coût d'installation et d'exploitation.

La présente invention a pour but de fournir un procédé et une installation qui, tout en procurant les avantages de la technique décrite dans WO-A-98/56722, remédient à ces inconvénients et procurent, en outre, d'autres avantages et possibilités d'application.

La présente invention a pour objet un procédé de traitement d'une pièce en verre en vue de découper ladite pièce suivant une ligne de découpe prédéterminée sur sa surface, ledit procédé comportant :
- au moins une étape, dite étape de traçage, au cours de laquelle un faisceau de rayons laser focalisé par un moyen de focalisation parcourt la ligne de découpe prédéterminée, ledit faisceau étant sensiblement focalisé sur ladite ligne de découpe prédéterminée, et
- au moins une autre étape, dite étape de chauffage, au cours de laquelle un faisceau de rayons laser parcourt la ligne de découpe prédéterminée sans être focalisée sur cette ligne, la portion de la surface irradiée par le faisceau laser chevauchant ladite ligne de découpe prédéterminée.

Dans ce procédé suivant l'invention, le même faisceau de rayons laser parcourt la ligne de découpe prédéterminée au cours d'une étape de traçage et au cours d'une étape de chauffage, le moyen de focalisation étant un moyen de focalisation réglable qui, lors d'une étape de traçage, focalise ledit faisceau de rayons laser sensiblement sur la ligne de découpe prédéterminée et qui, lors d'une étape de chauffage, fait en sorte que le point focal dudit faisceau soit nettement distant de la ligne de découpe prédéterminée.

Il importe de noter que si, dans le procédé suivant l'invention, le faisceau de rayons laser parcourt la ligne de découpe prédéterminée, cela implique un mouvement relatif entre la pièce à traiter et le rayon laser, ce qui peut être obtenu par un mouvement de la pièce à traiter et/ou par un mouvement de rayon laser.

Selon un mode de réalisation, le procédé suivant l'invention est tel que, au cours d'une étape de traçage, le faisceau de rayons laser focalisé parcourt la ligne de découpe prédéterminée du fait que la pièce en verre est mue de manière telle qu'à tout moment la ligne de découpe prédéterminée coïncide sensiblement avec le point focal du faisceau laser, et en ce que, au cours d'une étape de chauffage, le faisceau de rayons laser parcourt la ligne de découpe prédéterminée, du fait que la pièce en verre est mue de manière telle qu'à tout moment la portion de surface irradiée par le faisceau chevauche ladite ligne de découpe prédéterminée.

Ledit moyen de focalisation du faisceau de rayons laser peut notamment consister en une lentille convergente. Dans ce cas, le réglage de la focalisation du faisceau peut notamment se faire par un déplacement de ladite lentille suivant l'axe du faisceau.

Suivant une forme d'exécution avantageuse, ce déplacement de ladite lentille suivant l'axe du faisceau est provoqué et contrôlé par le déplacement de l'axe d'un moteur électrique linéaire.

Le faisceau de rayons laser projeté sur la surface de la pièce en verre au cours d'une étape de traçage peut être un faisceau de rayons laser pulsé.

Comme indiqué plus haut, le faisceau de rayons laser est, lors d'une étape de traçage, sensiblement focalisé sur la ligne de découpe prédéterminée sur la surface de la pièce. Il importe de comprendre par là que, lors de l'étape de traçage, le point focal du faisceau, qui correspond à l'endroit où le faisceau est physiquement le plus étroit et où la puissance du rayon est la plus concentrée, est situé sur la surface de la pièce ou seulement à une petite distance (par exemple de quelques millimètres) en deçà ou au-delà de cette surface. Il importe qu'à l'endroit de l'impact du faisceau focalisé avec la surface de la pièce en verre, la surface irradiée soit très petite (avec un diamètre inférieur à 500 µm, par exemple, ou même inférieur à 100 µm).

Le faisceau de rayons laser projeté sur la surface de la pièce en verre au cours d'une étape de traçage, peut être un faisceau de rayons laser pulsé.

Dans ce cas, le faisceau de rayons laser pulsé produit sur la surface de la pièce en verre une succession de zones d'impact ayant un diamètre de moins de 500 µm séparées les unes des autres d'une distance de moins de 2 mm.

Le diamètre de ces zones d'impact sera pas exemple inférieur à 100 µm et même inférieur à 50 µm.

Lesdites zones d'impact sont de préférence séparées les unes des autres d'une distance de moins de 1 mm. Cette distance sera, par exemple, comprise entre 100 et 800 µm.

Les caractéristiques physiques du faisceau de rayons laser pulsé sont avantageusement telles que lesdites zones d'impact sont soumises à l'action dudit faisceau avec une densité de rayonnement suffisamment élevée pour que des défauts ponctuels, coïncidant sensiblement avec ladite ligne de découpe prédéterminée, apparaissent à la surface de la pièce en verre.

Le mot "ponctuel" ne peut évidemment être compris ici dans un sens géométrique strict, lesdits défauts ponctuels étant généralement de petits cratères dont le diamètre est généralement inférieur à 500 µm ou même inférieur à 50 µm.

Le faisceau de rayons laser projeté sur la surface de la pièce en verre au cours d'une étape de traçage peut cependant aussi être un faisceau de rayons laser continu.

Dans ce cas, le faisceau de rayons laser continu projeté sur la surface de la pièce en verre au cours de cette étape de traçage, produit sur la surface de la pièce en verre une ligne d'impact continue ayant une largeur de moins de 500 µm. Cette ligne continue a, par exemple, une largeur de moins de 100 µm ou même de moins de 50 µm.

De manière particulière, les caractéristiques physiques du faisceau de rayons laser continu projeté sur la surface de la pièce en verre au cours d'une étape de traçage sont telles que ladite ligne d'impact continue est irradiée avec une densité d'irradiation suffisamment élevée pour qu'une fissure, coïncidant sensiblement avec ladite ligne de découpe prédéterminée, apparaisse à la surface de la pièce en verre.

Le faisceau de rayons laser projeté sur la surface de la pièce en verre au cours d'une étape de chauffage, peut être un faisceau de rayons laser pulsé ou continu.

Ce faisceau produit sur la surface de la pièce en verre une ligne d'impact ayant une largeur comprise entre 2 mm et 10 mm. Cette ligne aura, par exemple, une largeur d'environ 3 ou 4 mm.

Au cours d'une étape de chauffage, les caractéristiques physiques du faisceau de rayons laser et les conditions d'irradiation sont telles que la portion de surface irradiée est soumise à une densité d'irradiation telle que la géométrie de cette surface ne soit pas altérée mais que l'échauffement de la zone irradiée crée des contraintes mécaniques dans la masse de verre de cette zone.

Le procédé suivant l'invention comprend au moins une étape de traçage et au moins une étape de chauffage.

Toutefois, divers cycles de traitement peuvent être appliqués.

C'est ainsi qu'un cycle de traitement peut notamment comporter :
- une étape de traçage suivie d'une étape de chauffage, ou
- successivement une étape de traçage, une étape de chauffage et une étape de traçage, ou
- une étape de chauffage suivie d'une étape de traçage, ou
- successivement une étape de chauffage, une étape de traçage et une étape de chauffage.

Le procédé suivant l'invention convient pour la découpe de pièces en verre très diverses, tant pour ce qui concerne leur composition que leur forme.

Ces pièces peuvent notamment être faites en verre "ordinaire" (verre sodocalcique, par exemple) ou en verre riche en plomb (cristal).

La pièce peut être une pièce en verre plat ou une pièce en verre creux.

Dans le cas des pièces en verre creux tels que les verres à boire (avec ou sans pied), les vases, etc., la ligne de découpe prédéterminée forme généralement une courbe fermée.

Cette courbe fermée est généralement située dans un plan. Dans ce cas, la pièce en verre creux est mise en rotation autour d'un axe perpendiculaire à ce plan, au cours d'au moins une étape de chauffage et au moins une étape de traçage.

Le procédé suivant l'invention s'est notamment révélé très avantageux pour le décalottage de pièces en verre creux et cela non seulement pour les pièces de forme cylindrique, mais également pour des pièces en verre à profil évasé ou à profil rentrant. L'épaisseur de la pièce en verre, à l'endroit du décalottage, peut éventuellement être inférieure à 1 mm, mais cette épaisseur peut également être nettement plus grande, allant par exemple jusque 5 mm, voire au-delà de 5 mm.

Le procédé permet d'obtenir un bord décalotté très régulier, quasi plan, excepté des irrégularités de faible amplitude, facilement éliminables par un flettage léger, peu coûteux et facile à réaliser; le procédé permet d'obtenir ce bord régulier de façon très reproductible. De plus, pour certaines pièces en verre, en particulier pour les pièces de forme simple, par exemple cylindriques ou sensiblement cylindriques, et pour des pièces en verre, dont l'épaisseur de la paroi est en général inférieure à 2 mm, ce procédé permet d'obtenir un bord décalotté apte à être traité directement dans une station de rebrûlage, sans avoir être fletté au préalable.

Il a été spécifié plus haut que le faisceau de rayons laser projeté sur la surface de la pièce en verre au cours d'une étape de traçage, peut être un faisceau de rayons laser pulsé ou continu. Le faisceau de rayons laser projeté sur ladite surface au cours d'une étape de chauffage peut également être un faisceau pulsé ou continu.

Le type de faisceau appliqué pour le chauffage peut éventuellement être différent du type de faisceau pour le traçage : par exemple, un faisceau continu pour le chauffage et un faisceau pulsé pour le traçage.

Le type de faisceau appliqué peut cependant être le même pour le chauffage et pour le traçage. On a ainsi pu constater que pour la plupart des applications, on obtient de très bons résultats en appliquant le même faisceau de rayons laser, pulsé à la même fréquence, pour une étape de traçage et pour une étape de chauffage, seule la position du point focal du faisceau étant modifié lors du passage d'une étape à la suivante.

Il doit être entendu qu'il est question ici du type de faisceau de rayons laser projeté sur la surface de la pièce en verre à traiter et non du type de source laser.

En effet, en utilisant une source laser du type continu, on peut certainement projeter sur la pièce à traiter un faisceau laser continu.

Mais, en utilisant une source laser du type continu, on peut également, par hachage électronique, obtenir un faisceau pulsé qui peut alors être projeté sur la pièce à traiter.

De même, en utilisant une source laser du type pulsé, on peut certainement projeter sur la pièce à traiter un faisceau laser pulsé.

Mais, en utilisant une source laser du type pulsé, on peut également obtenir un faisceau laser "pseudocontinu" en augmentant la fréquence de pulsation ainsi que le rapport cyclique, c'est-à-dire le rapport entre la durée d'émission à haute énergie au cours d'un cycle et la durée du cycle total. Un tel faisceau laser "pseudocontinu" dans lequel l'énergie d'émission oscille faiblement autour d'un niveau d'énergie est à considérer comme un faisceau laser continu, dans le cadre de la présente invention.

La présente invention a également pour objet une installation pour le traitement d'une pièce en verre en vue de découper ladite pièce suivant une ligne de découpe prédéterminée sur la surface de ladite pièce,
l'installation comportant :
- une source de faisceau de rayons laser,
- un système de guidage dudit faisceau comportant un moyen de focalisation, et
- un poste de commande,
ladite installation étant apte à projeter sur la surface de ladite pièce :
dans au moins une étape, dite étape de traçage, un faisceau de rayons laser parcourant la ligne de découpe prédéterminée, ledit faisceau de rayons laser étant sensiblement focalisé sur ladite ligne de découpe prédéterminée par le moyen de focalisation,
dans au moins une étape, dite étape de chauffage, un faisceau de rayons laser parcourant la ligne de découpe prédéterminée, ledit faisceau de rayons laser n'étant pas focalisé sur ladite ligne de découpe, la portion de la surface irradiée par le faisceau de rayons laser chevauchant ladite ligne de découpe.

Dans l'installation suivant l'invention, le moyen de focalisation est un moyen de focalisation réglable apte à focaliser un faisceau de rayons laser émis par ladite source de rayons laser sur la ligne de découpe prédéterminée, au cours d'une étape de traçage, et apte à faire en sorte que le point focal du même faisceau de rayons laser projeté sur la ligne de découpe prédéterminée, soit nettement distant de cette ligne au cours d'une étape de chauffage.

Dans l'installation suivant l'invention, le moyen de focalisation peut, en particulier, être une lentille convergente pour laser.

Le moyen de focalisation peut notamment être un moyen de focalisation mobile, ayant au cours d'une étape de traçage une position telle que le faisceau de rayons laser est focalisé sur la ligne de découpe prédéterminée et ayant au cours d'une étape de traçage une position telle que le point focal du faisceau de rayons laser est nettement distant de la ligne de découpe prédéterminée.

Ledit système de guidage du faisceau peut comporter un chariot sur lequel le moyen de focalisation est monté. Selon une forme d'exécution de l'installation, le chariot est apte à déplacer le moyen de focalisation suivant l'axe du faisceau de rayons laser.

Suivant un mode de réalisation particulier, l'installation comporte un moteur électrique linéaire apte à déplacer ledit chariot.

Le moyen de focalisation est avantageusement réglé par un poste de commande automatisé.

Suivant une forme d'exécution avantageuse de l'installation, le moyen de focalisation est un moyen de focalisation mobile, ayant au cours d'une étape de traçage une position telle que le faisceau de rayons laser est focalisé sur la ligne de découpe prédéterminée et ayant au cours d'une étape de traçage une position telle que le point focal du faisceau de rayons laser est nettement distant de la ligne de découpe prédéterminée, le poste de commande réglant la position du moyen de focalisation.

Dans ce cas, le système de guidage peut comporter un chariot sur lequel le moyen de localisation est monté, le poste de commande étant apte à régler la position du moyen de focalisation en commandant le déplacement du chariot.

Le poste de commande peut notamment être apte à commander le déplacement du chariot dans une direction parallèle au faisceau de rayons laser.

L'installation peut comporter un système de détection de la position de la ligne de découpe prédéterminée sur la surface de l'objet en verre, le poste de commande étant alors apte à régler la position du moyen de focalisation en fonction de la position détectée de la ligne de découpe prédéterminée.

De manière avantageuse, l'installation comporte un dispositif de modulation apte à régler la fréquence et le mode de pulsation du faisceau de rayons laser.

Ce dispositif de modulation peut être commandé par ledit poste de commande.

Ce dispositif de modulation permet de régler la fréquence et le mode de pulsation (notamment le rapport cyclique) du faisceau de rayons laser projeté sur l'objet en verre à traiter, et cela aussi bien au cours d'une étape de traçage qu'au cours d'une étape de chauffage.

Dans une installation suivant l'invention, ledit système de guidage peut comporter au moins un miroir pour laser, apte à modifier la direction du faisceau de rayons laser. Ce système de guidage peut comporter au moins un miroir pour laser à position et/ou orientation réglable.

Dans ce cas, le poste de commande peut être apte à régler la direction du faisceau de rayons laser en commandant le changement de position et/ou d'orientation d'au moins un miroir pour laser.

Lorsque, dans un tel cas, l'installation comporte également un système détectant la position de la ligne de découpe prédéterminée, le poste de commande peut être apte à régler la position et/ou l'orientation d'au moins un miroir pour laser, en fonction de la position détectée de la ligne de découpe prédéterminée.

Une installation suivant l'invention comporte généralement au moins un dispositif apte à tenir la pièce en verre à traiter. Ce dispositif peut être un dispositif mobile apte à déplacer la pièce en verre et, en particulier, il peut être apte à déplacer la pièce en verre dans un plan perpendiculaire à l'axe du faisceau de rayons laser.

De manière plus particulière, ledit dispositif peut être apte à mettre la pièce en verre en rotation (notamment autour d'un axe perpendiculaire à l'axe du faisceau de rayon laser projeté sur ladite pièce).

Une installation suivant l'invention peut comporter une multitude de dispositifs aptes à tenir, déplacer et éventuellement mettre en rotation une multitude de pièces en verre à traiter.

Dans un tel cas, l'installation peut comporter un dispositif de translation pas à pas des dispositifs aptes à tenir les pièces en verre.

L'installation peut, en particulier, comporter des dispositifs aptes à tenir, mettre en rotation et entraîner pas à pas des pièces en verre creux.

Les dispositifs aptes à tenir, à déplacer et éventuellement à mettre en rotation les pièces en verre à traiter peuvent être commandés par ledit poste de commande.

La source de faisceau de rayons laser dont est équipée l'installation peut être une source à puissance réglable. Cette source peut également être une source à position et/ou orientation réglable.

Dans ces cas, ledit poste de commande peut être apte à régler la puissance et/ou la position et/ou l'orientation de la source laser.

Suivant une forme d'exécution particulière de l'installation, ledit système de guidage comporte au moins un déviateur divisant un faisceau de rayons laser en deux ou plusieurs faisceaux de rayons laser dérivés. Chacun de ces rayons laser dérivés peut alors être utilisé pour traiter un article en verre suivant le procédé conforme à l'invention et au moyen d'une installation telle que décrite ci-dessus.

D'autres particularités et avantages de l'invention ressortiront de la description de trois exemples d'exécution du procédé suivant l'invention et de la description, faite ci-après à titre d'exemple non limitatif, d'une forme de réalisation de l'installation suivant l'invention, référence étant faite aux dessins annexés, dans lesquels :
Fig. 1 et 2 sont deux graphiques (puissance d'émission en fonction du temps) d'un faisceau de rayons laser pulsé, modulé suivant deux modes différents;
Fig. 3 et 4 sont respectivement une vue en élévation et une vue en plan montrant une partie de l'installation suivant l'invention et une pièce en verre traitée par cette installation au cours d'une étape de traçage;
Fig. 5 et 6 sont des vues analogues aux Fig. 3 et 4 mais relatives à l'étape de chauffage;
Fig. 7 est une vue de la pièce en verre traitée, vue suivant les flèches C-C des Fig. 4 et 6;
Fig. 8 est une vue schématique agrandie d'un détail de la Fig. 7, et
Fig. 9 est une vue schématique en plan d'une installation suivant l'invention.

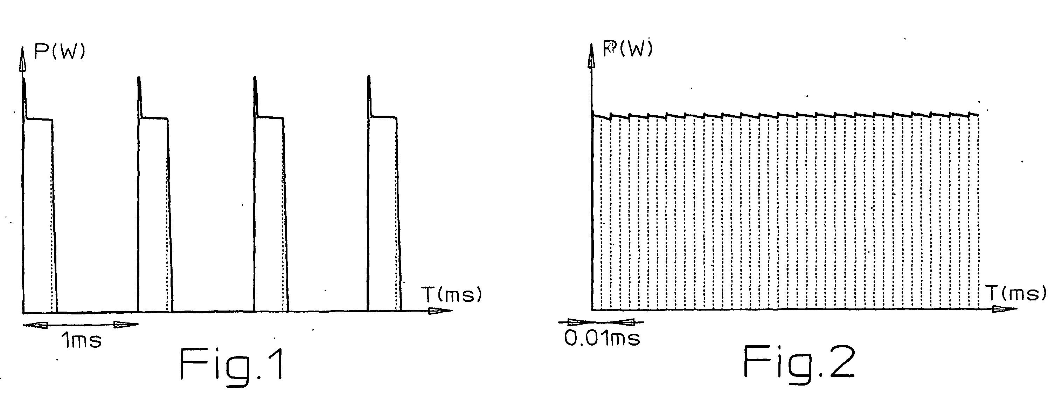

Le graphique montré à la Fig. 1 montre la puissance d'émission en fonction du temps, d'un faisceau de rayons laser pulsé. On peut voir qu'avec ce mode de modulation du faisceau, des pics de puissance d'émission sont nettement séparés par des espaces de temps où la puissance d'émission est nulle.

La fréquence des cycles d'émission, de même que le rapport cyclique, c'est-à-dire le rapport entre la durée d'émission à haute énergie et la durée du cycle total d'émission, et la puissance du laser pendant sa période d'émission à haute énergie sont autant de paramètres contrôlables et adaptables en fonction des circonstances d'utilisation.

En augmentant la fréquence et le rapport cyclique d'un faisceau laser pulsé, on peut obtenir un faisceau laser pseudocontinu, comme le montre le graphique de la Fig. 2. Dans ce cas, la puissance d'émission oscille (avec une faible amplitude) autour d'une valeur de puissance déterminée.

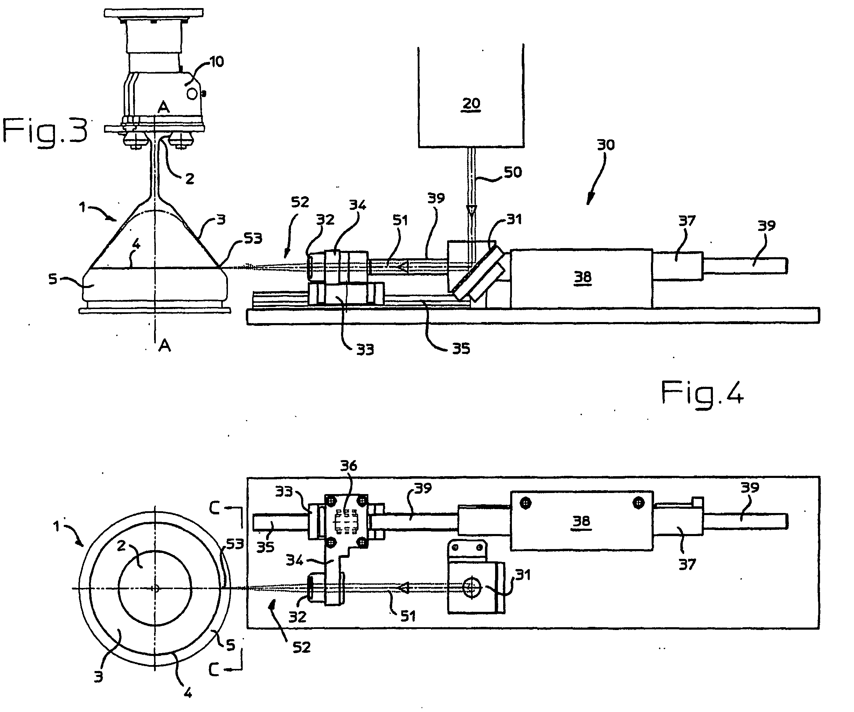

Suivant la forme d'exécution de l'invention illustrée dans les Fig. 3 à 6, la pièce en verre 1 à traiter est un corps de révolution creux présentant un pied 2 et une partie évasée 3.

La ligne de découpe prédéterminée 4 forme une courbe fermée sur la surface externe de la pièce en verre 1. La ligne de découpe prédéterminée 4 est située dans un plan perpendiculaire à l'axe de symétrie A-A de la pièce 1.

La pièce en verre 1 est tenue par son pied 2 dans un mandrin rotatif 10. Le pied 2 de la pièce en verre 1 est tourné vers le haut, la partie évasée 3 vers le bas.

Le mandrin rotatif 4 fait partie d'un dispositif d'entraînement non représenté.

La pièce en verre 1 est mise en rotation autour de son axe de symétrie A-A.

La pièce en verre 1 est traitée au moyen d'une installation comprenant une source de faisceau de rayons laser 20 et un système de guidage 30 pour un faisceau de rayons laser 50.

Le système de guidage 30 comporte un miroir 31 pour rayons laser et un moyen de focalisation 32 pour rayons laser.

La source de faisceau de rayons laser 20 émet un faisceau de rayons laser 50 dirigé vers le bas.

Ledit faisceau de rayons laser 50 frappe le miroir 31. Le miroir 31 est orienté de manière à ce que le faisceau de rayons laser reflété 51 est dirigé vers la pièce en verre 1 à traiter.

L'axe du faisceau de rayons laser reflété 51 est situé dans le plan de la ligne de découpe 4 et traverse l'axe de symétrie et de rotation A-A de la pièce en verre 1. L'axe du faisceau de rayons laser reflété 51 est donc perpendiculaire audit axe de symétrie et de rotation A-A.

Avant d'être projeté sur la pièce en verre 1, le faisceau de rayons laser reflété 51 passe au travers du moyen de focalisation 32.

Le moyen de focalisation 32 est une lentille convergente pour laser.

La lentille 32 est orientée de manière à ce qu'elle ne change pas l'orientation de l'axe du faisceau de rayons laser.

L'axe du faisceau de rayons laser focalisé 52 sortant dudit moyen de focalisation 32 coïncide donc avec l'axe du faisceau de rayons laser 51 reflété par le miroir 31.

Le moyen de focalisation 32 est monté sur un chariot 33 par l'intermédiaire d'un support 34.

Le chariot 33 coulisse sur un rail 35.

Le moyen de focalisation 32 est un moyen de focalisation réglable du fait qu'un déplacement du chariot 33 et donc de la lentille 32 permet de régler la position du point focal 53 du faisceau de rayons laser focalisé 52.

Le chariot 33 coulisse sans jeu sur le rail 35 par l'intermédiaire d'un système précontraint à recirculation de billes intégré audit chariot 33.

Le support 34 du moyen de focalisation 32 est relié par un accouplement élastique 36 à l'arbre 39 d'un moteur linéaire 37 monté sur un support 38.

Le miroir 31, le moyen de focalisation 32, le chariot 33 et le support 34, le rail 35, l'accouplement élastique 36, et le moteur 37 et son arbre 39 font tous partie du système de guidage 30.

La direction de déplacement de l'axe 39 du moteur linéaire 37 est parallèle à l'axe du rail 35 qui est, à son tour, parallèle aux axes du faisceau de rayons laser reflété 51 et du faisceau de rayons laser focalisé 52.

L'accouplement élastique 36 permet au support 34 du moyen de focalisation 32 de coulisser sans contrainte latérale parasite sur le rail 35 par l'intermédiaire du chariot 33.

La position du chariot 33, du support 34 et du moyen de focalisation 32 sur le rail 35 est déterminée par la position de l'axe 39 du moteur linéaire 37.

La position de l'axe 39 du moteur linéaire est réglée par le système de réglage électronique, non représenté, du moteur linéaire 37.

Ledit système de réglage électronique est commandé par le poste de commande, non représenté, de l'installation.

Ledit poste de commande détermine la position, la vitesse de déplacement et l'accélération de déplacement de l'axe 39 du moteur linéaire 37.

Le procédé suivant l'invention comprend au moins une étape de traçage et au moins une étape de chauffage.

Les Fig. 3 et 4 illustrent le fonctionnement de l'installation lors d'une étape de traçage.

Lors d'une étape de traçage, le système de réglage électronique du moteur linéaire 37 reçoit, du poste de commande, l'instruction de positionner l'axe 39 du moteur linéaire 37 et donc le moyen de focalisation 32 de manière à ce que le point focal 53 du faisceau de rayons laser focalisé 52 coïncide sensiblement avec la ligne de découpe prédéterminée 4 sur la surface de la pièce en verre 1.

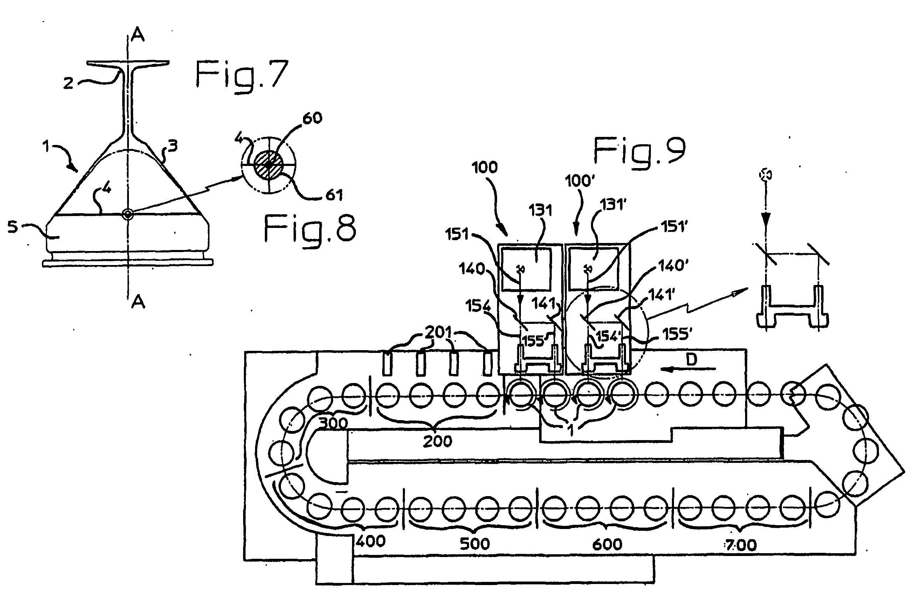

La portion 60 de la surface de la pièce en verre 1 irradiée à un moment donné lors d'une étape de traçage est montrée dans les Fig. 7 et 8. Cette portion 60 correspond à un point situé sur la ligne de découpe prédéterminée 4, cette portion 60 ayant un diamètre inférieur à 0,5 mm, typiquement d'environ 0,1 mm.

Du fait que le mandrin rotatif 10 maintient la pièce en verre 1 en rotation autour de son axe de symétrie A-A, le faisceau de rayons laser 52 focalisé sur la ligne de découpe prédéterminée 4 parcourt toute cette ligne 4 en une rotation de la pièce en verre 1.

La vitesse de rotation de la pièce en verre 1 est typiquement de l'ordre de 100 à 500 t/min.

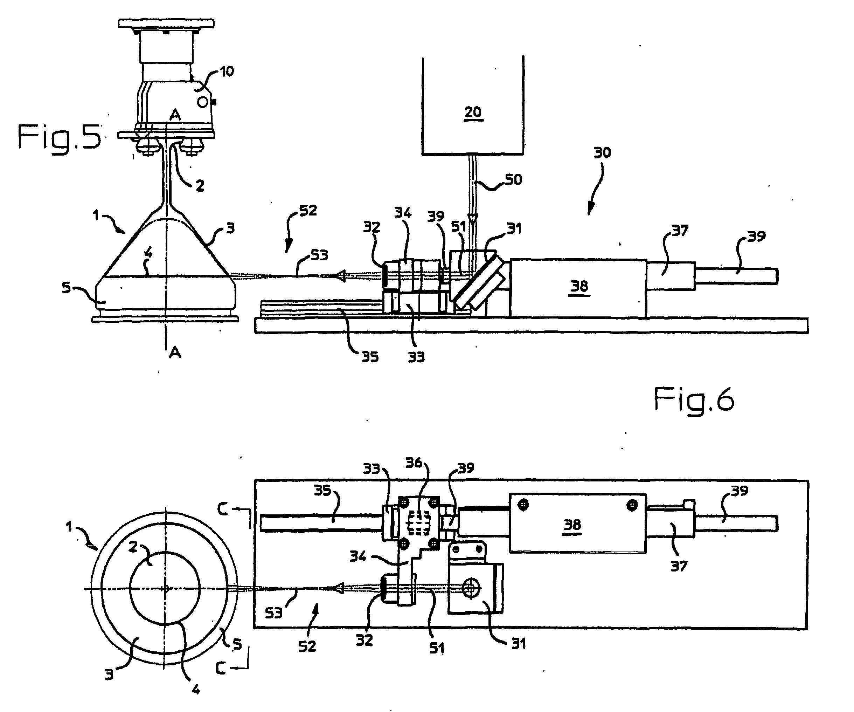

Les Fig. 5 et 6 illustrent le fonctionnement de l'installation lors d'une étape de chauffage.

Lors d'une étape de chauffage, le système de réglage électronique du moteur linéaire 37 reçoit, du poste de commande, l'instruction de positionner l'axe 39 du moteur linéaire 37 et donc le moyen de focalisation 32 de manière telle que le point focal 53 du faisceau de rayons laser focalisé 52 est nettement distant de la ligne de découpe prédéterminée 4 sur la surface de la pièce en verre 1. La distance entre l'intersection du faisceau de rayons laser focalisé 52 avec la ligne de découpe 4 et le point focal 53 dudit faisceau de rayons laser focalisé 52 est typiquement de l'ordre de 20 à 150 mm.

La portion 61 de la surface de la pièce en verre 1 irradiée à un moment donné lors d'une étape de chauffage est également montrée dans les Fig. 7 et 8. Cette portion 61 irradiée lors d'une étape de chauffage est nettement plus grande que la portion 60 irradiée lors d'une étape de traçage.

La portion 61 irradiée lors d'une étape de chauffage correspond à une zone chevauchant la ligne de découpe prédéterminée 4 dont le diamètre est typiquement de l'ordre de 2 à 8 mm.

Du fait que le mandrin rotatif 10 maintient la pièce en verre 1 en rotation autour de son axe de symétrie A-A, le faisceau de rayons laser focalisé 52, dont le point focal 53 est distant de la ligne de découpe prédéterminée 4, parcourt toute cette ligne de découpe 4 en une rotation de la pièce en verre 1.

Après une ou plusieurs étapes de traçage et une ou plusieurs étapes de chauffage, les effets des différentes étapes se conjuguent de manière à engendrer la séparation de la partie 5 de la pièce en verre 1 essentiellement selon la ligne de découpe prédéterminée 4.

La partie 5 de la pièce en verre, située en dessous de la ligne de découpe prédéterminée 4 (quand la pièce en verre est tenue par le mandrin rotatif 10) est désignée par le terme technique "calotte".

Le procédé de traitement illustré sur les Fig. 3 à 6 est donc un procédé de décalottage d'une pièce en verre.

L'installation pour le traitement de pièces en verre illustrée dans la Fig. 9 est une installation suivant l'invention comportant :
- deux stations de traçage et de chauffage 100, 100',
- une station de refroidissement 200,
- une station de flettage 300,
- une station de chanfreinage 400,
- une station de lavage et d'essorage 500, et
- une station de rebrûlage 600.

L'installation suivant la Fig. 9 est adaptée pour le traitement simultané de quatre pièces en verre au moyen d'un procédé tel que défini dans la revendication 1.

Les pièces en verre 1 sont des corps de révolution creux. Chacune desdites pièces en verre 1 est tenue par un mandrin rotatif maintenant ladite pièce en verre 1 en rotation autour de son axe de symétrie.

La ligne de découpe prédéterminée desdites pièces en verre 1 est située dans un plan perpendiculaire audit axe de symétrie.

Lesdits mandrins rotatifs font partie du système d'entraînement pas à pas.

Les mandrins rotatifs sont attachés à une bande de transport fermée se déplaçant pas à pas dans la direction D. Par pas, la bande de transport se déplace sur une distance correspondant à une section de ladite bande comportant quatre mandrins rotatifs.

Le système d'entraînement amène ainsi successivement quatre pièces en verre 1 devant les deux stations de traçage et de chauffage 100, 100'. Chacune des deux stations de traçage et de chauffage 100, 100' traite simultanément deux pièces en verre 1.

Les stations de chauffage et de traçage 100, 100' se distinguent de la station de traçage et de chauffage illustrée dans les Fig. 3 à 6 en ce qu'elles comportent un déviateur 140, 140' divisant le faisceau de rayons laser reflété 151, 151' par le miroir pour rayons laser 131, 131' en deux faisceaux de rayons laser dérivés 154, 154' et 155, 155'.

Le système de guidage des deux stations de traçage et de chauffage comporte aussi des moyens 140, 140' et 141, 141' aptes à diriger chacun deux faisceaux de rayons laser 154, 154' et 155, 155' vers une pièce en verre 1 de manière telle que l'axe desdits faisceaux de rayons laser est situé dans le plan de la ligne de découpe prédéterminée et traverse l'axe de symétrie et de rotation de la pièce en verre 1 correspondante.

Le réglage de la focalisation des faisceaux de rayons laser 154, 154' et 155, 155' lors d'une étape de traçage et lors d'une étape de chauffage est effectué de la manière décrite ci-dessus illustrée dans les Fig. 3 à 6.

Après le décalottage des quatre pièces en verre 1 situées devant les deux stations de traçage et de chauffage, le système d'entraînement pas à pas déplace lesdites quatre pièces en verre décalottées vers la station de refroidissement 200, plaçant en même temps quatre nouvelles pièces en verre à décalotter devant les deux stations de décalottage 100, 100'.

La station de refroidissement 200 est équipée de quatre détecteurs de calotte 201.

Chaque détecteur de calotte 201 vérifie si la pièce en verre positionnée devant le détecteur de calotte 201 comprend encore sa calotte. Dans le cas où la calotte ne s'est pas détachée de la pièce en verre, la pièce en verre, avec sa calotte est éjectée automatiquement.

Après le refroidissement des pièces en verre, le système d'entraînement pas à pas les amène vers la station de flettage 300 dans laquelle le bord décalotté des pièces en verre décalottées est fletté.

Après le flettage du bord des pièces en verre décalottées, le système d'entraînement pas à pas amène les pièces en verre décalottées vers la station de chanfreinage 400 du bord des pièces en verre.

Après le chanfreinage du bord des pièces en verre décalottées, le système d'entraînement amène les pièces en verre décalottées vers la station de lavage et d'essorage 500.

Après le lavage et l'essorage des pièces en verre décalottées, le système d'entraînement pas à pas les amène vers la station de séchage 600 et ensuite vers une station de rebrûlage 700 qui peut avantageusement comporter un système de trempe pour le bord des pièces en verre décalottées.

### EXEMPLE 1

On procède au décalottage d'articles en verre creux, au moyen d'une installation du type décrit ci-dessus et montrée schématiquement aux Fig. 3, 4, 5, 6 et 8, comportant une source laser de 250 W.

L'article à produire fait en verre sodocalcique, est du type illustré à la Fig. 3, c'est-à-dire un verre à pied, de forme évasée (à environ 45° par rapport à l'axe de symétrie) qui, à l'endroit de la ligne de décalottage, présente un diamètre de 105 mm et une épaisseur de 1,2 mm. L'article à décalotter est fixé par la base du pied dans un mandrin dont l'axe de rotation coïncide avec l'axe de symétrie de l'article en verre, et est mis en rotation à une vitesse de 250 t/min.

On applique à cet article en rotation le cycle de traitement suivant :
- traçage de l'article pendant 3 s avec le faisceau laser pulsé à 10 kHz (rapport cyclique de 30%) focalisé sur la surface de l'article (à l'endroit de la ligne de découpe prédéterminée);
- déplacement de l'élément focalisant (en moins de 0,1s) de sorte que le même faisceau laser présente un diamètre de 4 mm à l'endroit où il touche l'article;
- chauffage de la zone annulaire (qui chevauche la ligne de découpe prédéterminée) avec ce faisceau laser pendant 2 s.
- le décalottage se produit.

Le décalottage obtenu suit parfaitement un plan parallèle au pied de l'article, grâce au guidage de la fracture grâce à la trace préalable.

### EXEMPLE 2

Au moyen d'une installation analogue à celle utilisée dans l'Exemple 1, mais équipée d'une source laser de 200 W, on procède au décalottage d'un article en cristal.

Cet article en cristal, qui a une paroi latérale en forme de cylindre de révolution d'un diamètre de 80 mm et qui présente une épaisseur de 2 mm à l'endroit du décalottage, est recouvert d'une couche réfléchissante d'oxyde de plomb due à un polissage à la flamme à l'issue de sa formation.

Cet article en cristal est mis en rotation à une vitesse de rotation de 200 t/min et soumis au cycle de traitement suivant :
- traçage de l'article pendant 1,5 s avec le faisceau laser pulsé à 5 kHz (rapport cyclique de 50%) focalisé sur la surface de l'article (à l'endroit de la ligne de découpe prédéterminée);
- déplacement de la lentille focalisante (en moins de 0,1 s) de sorte que le même faisceau laser présente un diamètre de 3 mm à l'endroit où il touche l'article en cristal;
- chauffage de la zone annulaire (qui chevauche la ligne de découpe prédéterminée) avec ce faisceau laser pendant 3,5 s;
- nouveau déplacement de la lentille (en moins de 0,1 s) de sorte que le faisceau soit à nouveau focalisé sur la surface de l'article;
- traçage de l'article avec le faisceau laser pulsé à 5 kHz (rapport cyclique de 50%) focalisé sur la ligne de découpe;
- le décalottage se produit.

Le décalottage est de bonne qualité. Du cycle de traitement appliqué à l'article, la première étape de traçage permet de transpercer la couche d'oxyde de plomb réfléchissante et améliore le chauffage en profondeur. L'étape finale de traçage provoque le décalottage en provoquant une ligne de microdéfauts qui génère la rupture.

### EXEMPLE 3

Au moyen de la même installation que celle utilisée dans l'Exemple 1, équipée d'une source laser de 250 W, on procède au décalottage d'un article en verre creux.

L'article à produire (fait en verre sodocalcique) a une paroi latérale en substance cylindrique et une base plane et sa section transversale se présente comme un carré à coins arrondis. Le diamètre moyen est de 60 mm et le verre a une épaisseur de 2 mm à l'endroit du décalottage.

L'article en verre, mis en rotation autour de son axe longitudinal à une vitesse de rotation de 350 t/min, est soumis au cycle de traitement suivant :
- chauffage d'une zone annulaire qui chevauche la ligne de découpe prédéterminée à l'aide du faisceau laser pulsé à 10 kHz (rapport cyclique de 30%) pendant 3,5 s. Ce faisceau n'est pas focalisé sur la surface de l'article mais sur un point tel que le diamètre du faisceau soit d'environ 4 mm à l'endroit où il touche l'article;
- déplacement de la lentille focalisante (en moins de 0,1s) de sorte que le même faisceau coïncide sensiblement avec la surface de l'article;
- traçage de l'article pendant 0,5 s avec le faisceau laser pulsé à 10 kHz (rapport cyclique de 5%) focalisé sur la surface de l'article;
- le décalottage se produit.

Le décalottage obtenu suit parfaitement un plan parallèle à la base de l'article. L'étape (finale) de traçage permet d'initier la rupture par l'introduction de microdéfauts sur la ligne de découpe prédéterminée.

La profondeur de champ de l'élément de focalisation permet une focalisation acceptable sur la surface de l'article bien que celle-ci ne soit pas une surface de révolution.

Il est à noter qu'avec l'article traité dans l'Exemple 3, le rayon de l'article (à l'endroit de la ligne de décalottage) n'oscille que de ± 3 mm autour de la valeur moyenne du rayon.

Pour traiter des articles qui ne sont pas des corps de révolution et dont la distance entre la ligne de découpe prédéterminée par rapport à l'axe s'écarte de manière plus importante (par exemple de plus de 5 mm) d'une valeur moyenne, il peut être avantageux ou nécessaire d'asservir la position de l'élément de focalisation en fonction de la forme de l'article de manière à maintenir le point focal du faisceau sur la surface de l'article en rotation, au cours d'une étape de traçage.

## Revendications

1. Procédé de traitement d'une pièce en verre (1) en vue de découper ladite pièce suivant une ligne de découpe (4) prédéterminée sur sa surface, ledit procédé comportant :
- au moins une étape, dite étape de traçage, au cours de laquelle un faisceau de rayons laser focalisé (52) par un moyen de focalisation (32) parcourt la ligne de découpe prédéterminée (4), ledit faisceau (52) étant sensiblement focalisé sur ladite ligne de découpe prédéterminée, et
- au moins une autre étape, dite étape de chauffage, au cours de laquelle un faisceau de rayons laser parcourt la ligne de découpe prédéterminée (4) sans être focalisée sur cette ligne (4), la portion (61) de la surface irradiée par le faisceau laser chevauchant ladite ligne de découpe prédéterminée (4),
**caractérisé en ce que**
le même faisceau de rayons laser (52) parcourt la ligne de découpe prédéterminée au cours d'une étape de traçage et au cours d'une étape de chauffage, le moyen de focalisation (32) étant un moyen de focalisation réglable qui, lors d'une étape de traçage, focalise ledit faisceau de rayons laser (52) sensiblement sur la ligne de découpe prédéterminée (4) et qui, lors d'une étape de chauffage, fait en sorte que le point focal (53) dudit faisceau (52) soit nettement distant de la ligne de découpe prédéterminée (4).

2. Procédé suivant la revendication 1, **caractérisé en ce que**, au cours d'une étape de traçage, le faisceau de rayons laser focalisé (52) parcourt la ligne de découpe prédéterminée (4) du fait que la pièce en verre est mue de manière telle qu'à tout moment la ligne de découpe prédéterminée (4) coïncide sensiblement avec le point focal (53) du faisceau laser (52), et **en ce que**, au cours d'une étape de chauffage, le faisceau de rayons laser (52) parcourt la ligne de découpe prédéterminée (4), du fait que la pièce en verre (1) est mue de manière telle qu'à tout moment la portion de surface (61) irradiée par le faisceau (52) chevauche ladite ligne de découpe prédéterminée.

3. Procédé suivant l'une quelconque des revendications précédentes, **caractérisé en ce que** ledit moyen de focalisation (32) du faisceau consiste en une lentille convergente pour laser.

4. Procédé suivant la revendication 3, **caractérisé en ce que** le réglage de la focalisation du faisceau se fait par un déplacement de ladite lentille (32) suivant l'axe du faisceau.

5. Procédé suivant la revendication 4, **caractérisé en ce que** le déplacement de ladite lentille (32) est provoqué et contrôlé par le déplacement de l'axe d'un moteur électrique linéaire (37).

6. Procédé suivant l'une quelconque des revendications précédentes, **caractérisé en ce que** le faisceau de rayons laser (52) projeté sur la surface de la pièce en verre (1) au cours d'une étape de traçage est un faisceau de rayons laser pulsé.

7. Procédé suivant la revendication 6, **caractérisé en ce que** le faisceau de rayons laser pulsé (52) projeté sur la surface de la pièce en verre (1) au cours d'une étape de traçage produit sur cette surface une succession de zones d'impact (60) ayant un diamètre de moins de 500 µm séparées les unes des autres d'une distance de moins de 2 mm.

8. Procédé suivant la revendication 7, **caractérisé en ce que** lesdites zones d'impact (60) ont un diamètre de moins de 100 µm.

9. Procédé suivant la revendication 7, **caractérisé en ce que** lesdites zones d'impact (60) ont un diamètre de moins de 50 µm.

10. Procédé suivant l'une quelconque des revendications 7 à 9, **caractérisé en ce que** lesdites zones d'impact (60) sont séparées les unes des autres d'une distance de moins de 1mm.

11. Procédé suivant l'une quelconque des revendications 7 à 9, **caractérisé en ce que** lesdites zones d'impact (60) sont séparées les unes des autres d'une distance comprise entre 100 µm et 800 µm.

12. Procédé suivant l'une quelconque des revendications 7 à 11, **caractérisé en ce que** les caractéristiques physiques du faisceau de rayons laser pulsé sont telles que lesdites zones d'impact (60) sont soumises à l'action dudit faisceau avec une densité de rayonnement suffisamment élevée pour que des défauts ponctuels, coïncidant sensiblement avec ladite ligne de découpe prédéterminée (4), apparaissent à la surface de la pièce en verre (1).

13. Procédé suivant l'une quelconque des revendications 1 à 5, **caractérisé en ce que** le faisceau de rayons laser (52) projeté sur la surface de la pièce en verre (1) au cours d'une étape de traçage est un faisceau de rayons laser continu.

14. Procédé suivant la revendication 13, **caractérisé en ce que** le faisceau de rayons laser continu projeté sur la surface de la pièce en verre (1) au cours d'une étape de traçage produit sur cette surface une ligne d'impact continue ayant une largeur de moins de 500 µm.

15. Procédé suivant la revendication 14, **caractérisé en ce que** ladite ligne d'impact continue a une largeur de moins de 100 µm.

16. Procédé suivant la revendication 14, **caractérisé en ce que** ladite ligne d'impact continue a une largeur de moins de 50 µm.

17. Procédé suivant l'une quelconque des revendications 14 à 16, **caractérisé en ce que** les caractéristiques physiques du faisceau de rayons laser continu projeté sur la surface de la pièce en verre (1) au cours d'une étape de traçage sont telles que ladite ligne d'impact continue est irradiée avec une densité d'irradiation suffisamment élevée pour qu'une fissure, coïncidant sensiblement avec ladite ligne de découpe prédéterminée, apparaisse à la surface de la pièce en verre (1 ).

18. Procédé suivant l'une quelconque des revendications précédentes, **caractérisé en ce que** le faisceau de rayons laser (52) projeté sur la surface de la pièce en verre (1) au cours d'une étape de chauffage est un faisceau de rayons laser continu.

19. Procédé suivant l'une quelconque des revendications 1 à 17, **caractérisé en ce que** le faisceau de rayons laser (52) projeté sur la surface de la pièce en verre (1) au cours d'une étape de chauffage est un faisceau de rayons laser pulsé.

20. Procédé suivant l'une quelconque des revendications 18 et 19, **caractérisé en ce que** le faisceau de rayons laser (52) projeté sur la surface de la pièce en verre (1) au cours d'une étape de chauffage produit sur cette surface une ligne d'impact ayant une largeur comprise entre 2 mm et 10 mm.

21. Procédé suivant l'une quelconque des revendications 18 à 20, **caractérisé en ce que** les caractéristiques physiques du faisceau de rayons laser (52) projeté sur la surface de la pièce en verre (1) au cours d'une étape de chauffage et les conditions d'irradiation au cours de cette étape de chauffage sont telles que la portion de surface irradiée (61) est soumise à une densité d'irradiation telle que la géométrie de cette surface ne soit pas altérée mais que l'échauffement de la zone irradiée crée des contraintes mécaniques dans la masse de verre de cette zone.

22. Procédé suivant l'une quelconque des revendications précédentes, **caractérisé en ce qu'**il comporte une étape de traçage suivie d'une étape de chauffage.

23. Procédé suivant l'une quelconque des revendications 1 à 9, **caractérisé en ce qu'**il comporte successivement une étape de traçage, une étape de chauffage et une étape de traçage.

24. Procédé suivant l'une quelconque des revendications 1 à 9, **caractérisé en ce qu'**il comporte une étape de chauffage suivie d'une étape de traçage.

25. Procédé suivant l'une quelconque des revendications 1 à 9, **caractérisé en ce qu'**il comporte successivement une étape de chauffage, une étape de traçage et une étape de chauffage.

26. Procédé suivant l'une quelconque des revendications précédentes, **caractérisé en ce que** la pièce en verre (1) est une pièce en verre creux, la ligne de découpe prédéterminée (4) formant une courbe fermée.

27. Procédé suivant la revendication 26, **caractérisé en ce que** ladite courbe fermée est située dans un plan, ladite pièce en verre creux étant mise en rotation autour d'un axe perpendiculaire à ce plan, au cours d'une étape de traçage et au cours d'une étape de chauffage.

28. Procédé suivant l'une quelconque des revendications précédentes, **caractérisé en ce que** la pièce en verre (1) est une pièce en verre plat.

29. Installation pour le traitement d'une pièce en verre en vue de découper ladite pièce suivant une ligne de découpe prédéterminée (4) sur la surface de ladite pièce (1),
l'installation comportant :
- une source (20) de faisceau de rayons laser,
- un système de guidage (30) dudit faisceau comportant un moyen de focalisation (32), et
- un poste de commande,
ladite installation étant apte à projeter sur la surface de ladite pièce (1) :
dans au moins une étape, dite étape de traçage, un faisceau de rayons laser (52) parcourant la ligne de découpe prédéterminée (4), ledit faisceau de rayons laser (52) étant sensiblement focalisé sur ladite ligne de découpe prédéterminée (4) par le moyen de focalisation,
dans au moins une étape, dite étape de chauffage, un faisceau de rayons laser parcourant la ligne de découpe prédéterminée (4), ledit faisceau de rayons laser n'étant pas focalisé sur ladite ligne de découpe (4), la portion (61) de la surface irradiée par le faisceau de rayons laser chevauchant ladite ligne de découpe (4),
**caractérisée en ce que** le moyen de focalisation (32) est un moyen de focalisation réglable apte à focaliser un faisceau de rayons laser (52) émis par ladite source de rayons laser (20) sur la ligne de découpe prédéterminée (4), au cours d'une étape de traçage, et apte à faire en sorte que le point focal (54) du même faisceau de rayons laser (52) projeté sur la ligne de découpe prédéterminée (4), soit nettement distance de cette ligne (4) au cours d'une étape de chauffage.

30. Installation suivant la revendication 29, **caractérisée en ce que** le moyen de focalisation (32) est une lentille convergente pour laser.

31. Installation suivant l'une quelconque des revendications 29 et 30, **caractérisée en ce que** le moyen de focalisation (32) est un moyen de focalisation mobile, ayant au cours d'une étape de traçage une position telle que le faisceau de rayons laser (52) est focalisé sur la ligne de découpe prédéterminée (4) et ayant au cours d'une étape de chauffage une position telle que le point focal (53) du faisceau de rayons laser (52) est nettement distant de la ligne de découpe prédéterminée (4).

32. Installation suivant la revendication 31, **caractérisée en ce que** le système de guidage (30) comporte un chariot (33) sur lequel le moyen de focalisation (32) est monté.

33. Installation suivant la revendication 32, **caractérisée en ce que** le chariot (33) est apte à déplacer le moyen de focalisation (32) suivant l'axe du faisceau de rayons laser (52) projeté.

34. Installation suivant la revendication 33, **caractérisée en ce qu'**elle comporte un moteur électrique linéaire (37) apte à déplacer ledit chariot (33).

35. Installation suivant l'une quelconque des revendications 29 à 34, **caractérisée en ce que** le moyen de focalisation (32) est réglé par le poste de commande.

36. Installation suivant la revendication 35, **caractérisée en ce que** le moyen de focalisation (32) est un moyen de focalisation mobile, ayant au cours d'une étape de traçage une position telle que le faisceau de rayons laser (52) est focalisé sur la ligne de découpe prédéterminée (4) et ayant au cours d'une étape de chauffage une position telle que le point focal (53) du faisceau de rayons laser (52) est nettement distant de la ligne de découpe prédéterminée (4), le poste de commande réglant la position du moyen de focalisation (32).

37. Installation suivant la revendication 36, **caractérisée en ce que** le système de guidage (30) comporte un chariot (33) sur lequel le moyen de focalisation (32) est monté, le poste de commande étant apte à régler la position du moyen de focalisation (32) en commandant le déplacement du chariot (33).

38. Installation suivant la revendication 37, **caractérisée en ce que** le poste de commande est apte à commander le déplacement du chariot (33)dans une direction parallèle au faisceau de rayons laser (52).

39. Installation suivant l'une quelconque des revendications 31 à 38, **caractérisée en ce qu'**elle comporte un système détectant la position de la ligne de découpe prédéterminée (4) et **en ce que** le poste de commande est apte à régler la position du moyen de focalisation (32) en fonction de la position détectée de la ligne de découpe prédéterminée (4).

40. Installation suivant l'une quelconque des revendications 29 à 39, **caractérisée en ce qu'**elle comporte un dispositif de modulation apte à régler la fréquence et le mode de pulsation du faisceau de rayons laser.

41. Installation suivant la revendication 40, **caractérisée en ce que** le dispositif de modulation est commandé par le poste de commande.

42. Installation suivant l'une quelconque des revendications précédentes, **caractérisée en ce que** le système de guidage (30) comporte au moins un miroir pour laser (31) apte à modifier la direction du faisceau de rayons laser.

43. Installation suivant la revendication 42, **caractérisée en ce que** le système de guidage (30) comporte au moins un miroir pour laser (31) à position et/ou orientation réglable.

44. Installation suivant la revendication 43, **caractérisée en ce que** le poste de commande est apte à régler la direction du faisceau de rayons laser en commandant le changement de la position et/ou d'orientation d'au moins un miroir pour laser (31).

45. Installation suivant la revendication 44, **caractérisée en ce qu'**elle comporte un système détectant la position de la ligne de découpe prédéterminée (4) et **en ce que** le poste de commande est apte à régler la position et/ou l'orientation d'au moins un miroir pour laser (31 ), en fonction de la position détectée de la ligne de découpe prédéterminée (4).

46. Installation suivant l'une quelconque des revendications 29 à 45, **caractérisée en ce qu'**elle comporte un dispositif (10) apte à tenir la pièce en verre (1) à traiter.

47. Installation suivant la revendication 46, **caractérisée en ce que** le dispositif (10) apte à tenir la pièce en verre (1) est un dispositif mobile apte à déplacer la pièce en verre (1).

48. Installation suivant l'une quelconque des revendications 46 et 47, **caractérisée en ce que** le dispositif (10) apte à tenir la pièce en verre est apte à déplacer la pièce en verre (1) dans un plan perpendiculaire à l'axe du faisceau de rayons laser (52).

49. Installation suivant l'une quelconque des revendications 46 à 48, **caractérisée en ce que** le dispositif (10) apte à tenir la pièce en verre (1) est apte à mettre la pièce en verre (1) en rotation.

50. Installation suivant la revendication 49, **caractérisée en ce que** le dispositif (10) apte à tenir la pièce en verre (1) est apte à mettre la pièce en verre (1) en rotation autour d'un axe (A-A) perpendiculaire à l'axe du faisceau de rayons laser (52).

51. Installation suivant l'une quelconque des revendications 46 à 50, **caractérisée en ce que** le dispositif (10) apte à tenir la pièce en verre (1) est multiplié de manière à constituer une chaîne de transfert apte à tenir une multitude de pièces en verre.

52. Installation suivant la revendication 51, **caractérisée en ce que** la chaîne de transfert est un dispositif d'entraînement pas à pas.

53. Installation suivant l'une quelconque des revendications 46 à 52, **caractérisée en ce que** la chaîne de transfert est adaptée pour la mise en rotation de pièces en verre creux.

54. Installation suivant l'une quelconque des revendications 46 à 53, **caractérisée en ce que** le dispositif (10) apte à tenir la pièce en verre (1) est commandé par le poste de commande.

55. Installation suivant l'une quelconque des revendications 29 à 54, **caractérisée en ce que** la source (20) de faisceau de rayons laser est une source à puissance réglable.

56. Installation suivant la revendication 55, **caractérisée en ce que** le poste de commande est apte à régler la puissance de la source (20) de faisceau de rayons laser.

57. Installation suivant l'une quelconque des revendications 29 à 56, **caractérisée en ce que** la source (20) de faisceau de rayons laser est une source à position et/ou orientation réglable.

58. Installation suivant la revendication 57, **caractérisée en ce que** le poste de commande est apte à régler la position et/ou l'orientation du la source (20) de faisceau de rayons laser.

59. Installation suivant l'une quelconque des revendications 29 à 58, **caractérisée en ce que** le système de guidage comporte au moins un déviateur apte à diviser un faisceau de rayons laser en deux ou plusieurs faisceaux de rayons laser dérivés.

## Patentansprüche

1. Verfahren zur Bearbeitung eines Werkstücks (1) aus Glas zum Zweck des Schneidens dieses Werkstücks längs einer vorbestimmten Schnittlinie (4) auf seiner Oberfläche, wobei dieses Verfahren umfaßt:
- mindestens einen Schritt, Anreißschnitt genannt, in dem ein durch ein Fokussierungsmittel (32) fokussiertes Laserstrahlenbündel die vorbestimmte Schnittlinie (4) durchläuft, wobei das Bündel (52) im wesentlichen auf diese vorbestimmte Schnittlinie fokussiert ist, und
- mindestens einen weiteren Schritt, Erhitzungsschritt genannt, in dem ein Laserstrahlenbündel die vorbestimmte Schnittlinie (4) durchläuft, ohne auf diese Linie (4) fokussiert zu sein, wobei der von dem Laserbündel bestrahlte Bereich (61) der Oberfläche die vorbestimmte Schnittlinie (4) überdeckt,
**dadurch gekennzeichnet,**
**daß** das gleiche Laserstrahlenbündel (52) die vorbestimmte Schnittlinie in einem Anreißschritt und in einem Erhitzungsschritt durchläuft, wobei das Fokussierungsmittel (32) ein verstellbares Fokussierungsmittel ist, das in einem Anreißschritt das Laserstrahlenbündel (52) im wesentlichen auf die vorbestimmte Schnittlinie (4) fokussiert und das in einem Erhitzungsschritt bewirkt, daß der Brennpunkt (53) dieses Bündels (52) von der vorbestimmten Schnittlinie (4) deutlich entfernt ist.

2. Verfahren nach Anspruch 1, **dadurch gekennzeichnet, daß** das fokussierte Laserstrahlenbündel (52) in einem Anreißschritt die vorbestimmte Schnittlinie (4) dadurch durchläuft, daß das Werkstück aus Glas so bewegt wird, daß die vorbestimmte Schnittlinie (4) zu jedem Zeitpunkt mit dem Brennpunkt (53) des Laserbündels (52) im wesentlichen zusammenfällt, und daß das Laserstrahlenbündel (52) in einem Erhitzungsschritt die vorbestimmte Schnittlinie (4) dadurch durchläuft, daß das Werkstück (1) aus Glas so bewegt wird, daß der von dem Bündel (52) bestrahlte Oberflächenbereich (61) zu jedem Zeitpunkt die vorbestimmte Schnittlinie überdeckt.

3. Verfahren nach einem der vorhergehenden Ansprüche, **dadurch gekennzeichnet, daß** das Mittel (32) zum Fokussieren des Bündels aus einer Laser-Sammellinse besteht.

4. Verfahren nach Anspruch 3, **dadurch gekennzeichnet, daß** die Einstellung der Fokussierung des Bündels durch eine Bewegung der Linse (32) längs der Achse des Bündels vor sich geht.

5. Verfahren nach Anspruch 4, **dadurch gekennzeichnet, daß** die Bewegung der Linse (32) durch die Bewegung der Achse eines linearen Elektromotors (37) bewirkt und gesteuert wird.

6. Verfahren nach einem der vorhergehenden Ansprüche, **dadurch gekennzeichnet, daß** das Laserstrahlenbündel (52), das in einem Anreißschritt auf die Oberfläche des Werkstücks (1) aus Glas gerichtet wird, ein gepulstes Laserstrahlenbündel ist.

7. Verfahren nach Anspruch 6, **dadurch gekennzeichnet, daß** das gepulste Laserstrahlenbündel (52), das in einem Anreißschritt auf die Oberfläche des Werkstücks (1) aus Glas gerichtet wird, auf dieser Oberfläche eine Folge von Aufschlagzonen (60) erzeugt, die einen Durchmesser von weniger als 500 µm haben und in einem gegenseitigen Abstand von weniger als 2 mm angeordnet sind.

8. Verfahren nach Anspruch 7, **dadurch gekennzeichnet, daß** die Aufschlagzonen (60) einen Durchmesser von weniger als 100 µm haben.

9. Verfahren nach Anspruch 7, **dadurch gekennzeichnet, daß** die Aufschlagzonen (60) einen Durchmesser von weniger als 50 µm haben.

10. Verfahren nach einem der Ansprüche 7 bis 9, **dadurch gekennzeichnet, daß** die Aufschlagzonen (60) in einem gegenseitigen Abstand von weniger als 1 mm angeordnet sind.

11. Verfahren nach einem der Ansprüche 7 bis 9, **dadurch gekennzeichnet, daß** diese Aufschlagzonen (60) in einem gegenseitigen Abstand von 100 µm bis 800 µm angeordnet sind.

12. Verfahren nach einem der Ansprüche 7 bis 11, **dadurch gekennzeichnet, daß** die physikalischen Merkmale des gepulsten Laserstrahlenbündels so gewählt sind, daß die Aufschlagzonen (60) der Einwirkung dieses Bündels mit einer Strahlungsdichte ausgesetzt sind, die so hoch ist, daß auf der Oberfläche des Werkstücks (1) aus Glas punktförmige Fehler erscheinen, die im wesentlichen mit dieser vorbestimmten Schnittlinie (4) zusammenfallen.

13. Verfahren nach einem der Ansprüche 1 bis 5, **dadurch gekennzeichnet, daß** das Laserstrahlenbündel (52), das in einem Anreißschritt auf die Oberfläche des Werkstücks (1) aus Glas gerichtet wird, ein kontinuierliches Laserstrahlenbündel ist.

14. Verfahren nach Anspruch 13, **dadurch gekennzeichnet, daß** das kontinuierliche Laserstrahlenbündel, das in einem Anreißschritt auf die Oberfläche des Werkstücks (1) aus Glas gerichtet wird, auf dieser Oberfläche eine kontinuierliche Aufschlaglinie mit einer Breite von weniger als 500 µm erzeugt.

15. Verfahren nach Anspruch 14, **dadurch gekennzeichnet, daß** die kontinuierliche Aufschlaglinie eine Breite von weniger als 100 µm hat.

16. Verfahren nach Anspruch 14, **dadurch gekennzeichnet, daß** die kontinuierliche Aufschlaglinie eine Breite von weniger als 50 µm hat.

17. Verfahren nach einem der Ansprüche 14 bis 16, **dadurch gekennzeichnet, daß** die physikalischen Merkmale des kontinuierlichen Laserstrahlenbündels, das in einem Anreißschritt auf die Oberfläche des Werkstücks (1) aus Glas gerichtet wird, so gewählt sind, daß die kontinuierliche Aufschlaglinie mit einer Bestrahlungsdichte bestrahlt wird, die so hoch ist, daß auf der Oberfläche des Werkstücks (1) aus Glas ein Riß erscheint, der mit der vorbestimmten Schnittlinie zusammenfällt.

18. Verfahren nach einem der vorhergehenden Ansprüche, **dadurch gekennzeichnet, daß** das Laserstrahlenbündel (52), das in einem Erhitzungsschritt auf die Oberfläche des Werkstücks (1) aus Glas gerichtet wird, ein kontinuierliches Laserstrahlenbündel ist.

19. Verfahren nach einem der Ansprüche 1 bis 17, **dadurch gekennzeichnet, daß** das Laserstrahlenbündel (52), das in einem Erhitzungsschritt auf die Oberfläche des Werkstücks (1) aus Glas gerichtet wird, ein gepulstes Laserstrahlenbündel ist.

20. Verfahren nach einem der Ansprüche 18 und 19, **dadurch gekennzeichnet, daß** das Laserstrahlenbündel (52), das in einem Erhitzungsschritt auf die Oberfläche des Werkstücks (1) aus Glas gerichtet wird, auf dieser Oberfläche eine Aufschlaglinie erzeugt, die eine Breite zwischen 2 mm und 10 mm hat.

21. Verfahren nach einem der Ansprüche 18 bis 20, **dadurch gekennzeichnet, daß** die physikalischen Merkmale des Laserstrahlenbündels (52), das in einem Erhitzungsschritt auf die Oberfläche des Werkstücks (1) aus Glas gerichtet wird, und die Bestrahlungsbedingungen in diesem Erhitzungsschritt so gewählt sind, daß der bestrahlte Oberflächenbereich (61) einer solchen Bestrahlungsdichte ausgesetzt ist, daß die Geometrie dieser Oberfläche nicht beeinträchtigt wird, aber daß die Erhitzung der bestrahlten Zone in der Glasmasse dieser Zone mechanische Spannungen erzeugt.

22. Verfahren nach einem der vorhergehenden Ansprüche, **dadurch gekennzeichnet, daß** es einen Anreißschritt umfaßt, auf den ein Erhitzungsschritt folgt.

23. Verfahren nach einem der Ansprüche 1 bis 9, **dadurch gekennzeichnet, daß** es nacheinander einen Anreißschritt, einen Erhitzungsschritt und einen Anreißschritt umfaßt.

24. Verfahren nach einem der Ansprüche 1 bis 9, **dadurch gekennzeichnet, daß** es einen Erhitzungsschritt umfaßt, auf den ein Anreißschritt folgt.

25. Verfahren nach einem der Ansprüche 1 bis 9, **dadurch gekennzeichnet, daß** es nacheinander einen Erhitzungsschritt, einen Anreißschritt und einen Erhitzungsschritt umfaßt.

26. Verfahren nach einem der vorhergehenden Ansprüche, **dadurch gekennzeichnet, daß** das Werkstück (1) aus Glas ein Werkstück aus Hohlglas ist, wobei die vorbestimmte Schnittlinie (4) eine geschlossene Kurve bildet.

27. Verfahren nach Anspruch 26, **dadurch gekennzeichnet, daß** die geschlossene Kurve in einer Ebene liegt, wobei das Werkstück aus Hohlglas in einem Anreißschritt und in einem Erhitzungsschritt um eine zu dieser Ebene senkrechte Achse in Drehung versetzt wird.

28. Verfahren nach einem der vorhergehenden Ansprüche, **dadurch gekennzeichnet, daß** das Werkstück (1) aus Glas ein Werkstück aus Flachglas ist.

29. Anlage zur Bearbeitung eines Werkstücks aus Glas zum Zweck des Schneidens dieses Werkstücks längs einer vorbestimmten Schnittlinie (4) auf der Oberfläche des Werkstücks (1),
wobei diese Anlage umfaßt:
- eine Laserstrahlenbündelquelle (20),
- ein System (30) zum Führen dieses Bündels, umfassend ein Fokussierungsmittel (32) und
- eine Steuervorrichtung,
wobei diese Anlage dafür ausgelegt ist, auf die Oberfläche dieses Werkstücks (1)
in mindestens einem Schritt, Anreißschritt genannt, ein Laserstrahlbündel (52) zur richten, das die vorbestimmte Schnittlinie (4) durchläuft, wobei dieses Laserstrahlenbündel (52) durch das Fokussierungsmittel im wesentlichen auf diese vorbestimmte Schnittlinie (4) fokussiert wird,
in mindestens einem Schritt, Erhitzungsschritt genannt, ein Laserstrahlenbündel zu richten, das die vorbestimmte Schnittlinie (4) durchläuft, wobei dieses Laserstrahlenbündel nicht auf die Schnittlinie (4) fokussiert ist und der von dem Laserstrahlenbündel bestrahlte Bereich (61) die Schnittlinie (4) überdeckt,
**dadurch gekennzeichnet, daß** das Fokussierungsmittel (32) ein verstellbares Fokussierungsmittel ist, das dafür ausgelegt ist, in einem Anreißschritt ein von der Laserstrahlenquelle (20) ausgestrahltes Laserstrahlenbündel (52) auf die vorbestimmte Schnittlinie (4) zu fokussieren, und dafür ausgelegt ist, so zu wirken, daß der Brennpunkt (54) desselben, auf die vorbestimmte Schnittlinie (4) gerichteten Laserstrahlenbündels (54) in einem Erhitzungsschritt von dieser Linie (4) deutlich entfernt ist.

30. Anlage nach Anspruch 29, **dadurch gekennzeichnet, daß** das Fokussierungsmittel (32) eine Sammellinse für Laser ist.

31. Anlage nach einem der Ansprüche 29 und 30, **dadurch gekennzeichnet, daß** das Fokussierungsmittel (32) ein bewegliches Fokussierungsmittel ist, das in einem Anreißschritt eine solche Stellung einnimmt, daß das Laserstrahlenbündel (52) auf die vorbestimmte Schnittlinie (4) fokussiert ist, und in einem Erhitzungsschritt eine solche Stellung einnimmt, daß der Brennpunkt (53) des Laserstrahlenbündels (52) von der vorbestimmten Schnittlinie (4) deutlich entfernt ist.

32. Anlage nach Anspruch 31, **dadurch gekennzeichnet, daß** das Führungssystem (30) einen Wagen (33) aufweist, auf dem das Fokussierungsmittel (32) montiert ist.

33. Anlage nach Anspruch 32, **dadurch gekennzeichnet, daß** der Wagen (33) das Fokussierungsmittel (32) längs der Achse des ausgestrahlten Laserstrahlenbündels (52) bewegen kann.

34. Anlage nach Anspruch 33, **dadurch gekennzeichnet, daß** sie einen linearen Elektromotor (37) aufweist, der den Wagen (33) bewegen kann.

35. Anlage nach einem der Ansprüche 29 bis 34, **dadurch gekennzeichnet, daß** das Fokussierungsmittel (32) durch die Steuervorrichtung eingestellt wird.

36. Anlage nach Anspruch 35, **dadurch gekennzeichnet, daß** das Fokussierungsmittel (32) ein bewegliches Fokussierungsmittel ist, das in einem Anreißschritt eine solche Stellung einnimmt, daß das Laserstrahlenbündel (52) auf die vorbestimmte Schnittlinie (4) fokussiert wird, und in einem Erhitzungsschritt eine solche Stellung einnimmt, daß der Brennpunkt (53) des Laserstrahlenbündels (52) von der vorbestimmten Schnittlinie (4) deutlich entfernt ist, wobei die Steuervorrichtung die Stellung des Fokussierungsmittels (32) einstellt.

37. Anlage nach Anspruch 36, **dadurch gekennzeichnet, daß** das Führungssystem (30) einen Wagen (33) aufweist, auf dem das Fokussierungsmittel (32) montiert ist, wobei die Steuervorrichtung dafür ausgelegt ist, die Stellung des Fokussierungsmittels (32) durch Steuerung der Bewegung des Wagens (33) einzustellen.

38. Anlage nach Anspruch 37, **dadurch gekennzeichnet, daß** die Steuervorrichtung dafür ausgelegt ist, die Bewegung des Wagens (33) in einer zum Laserstrahlenbündel (52) parallelen Richtung zu steuern.

39. Anlage nach einem der Ansprüche 31 bis 38, **dadurch gekennzeichnet, daß** sie ein System aufweist, das die Stellung der vorbestimmten Schnittlinie (4) erfaßt, und daß die Steuervorrichtung dafür ausgelegt ist, die Stellung des Fokussierungsmittels (32) in Abhängigkeit von der erfaßten Stellung der vorbestimmten Schnittlinie (4) einzustellen.

40. Anlage nach einem der Ansprüche 29 bis 39, **dadurch gekennzeichnet, daß** sie eine Modulationsvorrichtung aufweist, die dafür ausgelegt ist, die Frequenz und den Pulsmodus des Laserstrahlenbündels einzustellen.

41. Anlage nach Anspruch 40, **dadurch gekennzeichnet, daß** die Modulationsvorrichtung durch die Steuervorrichtung gesteuert wird.

42. Anlage nach einem der vorhergehenden Ansprüche, **dadurch gekennzeichnet, daß** das Führungssystem (30) mindestens einen Laserspiegel (31) aufweist, der dafür ausgelegt ist, die Richtung des Laserstrahlenbündels zu ändern.

43. Anlage nach Anspruch 42, **dadurch gekennzeichnet, daß** das Führungssystem (30) mindestens einen Laserspiegel (31) mit verstellbarer Stellung und/oder Ausrichtung aufweist.

44. Anlage nach Anspruch 43, **dadurch gekennzeichnet, daß** die Steuervorrichtung dafür ausgelegt ist, die Richtung des Laserstrahlenbündels durch Steuerung der Änderung der Stellung und/oder der Ausrichtung mindestens eines Laserspiegels (31) zu verstellen.

45. Anlage nach Anspruch 44, **dadurch gekennzeichnet, daß** sie ein System aufweist, das die Stellung der vorbestimmten Schnittlinie (4) erfaßt, und daß die Steuervorrichtung dafür ausgelegt ist, die Stellung und/oder die Ausrichtung mindestens eines Laserspiegels (31) in Abhängigkeit von der erfaßten Stellung der vorbestimmten Schnittlinie (4) einzustellen.

46. Anlage nach einem der Ansprüche 29 bis 45, **dadurch gekennzeichnet, daß** sie eine Vorrichtung (10) aufweist, die dafür ausgelegt ist, das zu bearbeitende Werkstück (1) aus Glas zu halten.

47. Anlage nach Anspruch 46, **dadurch gekennzeichnet, daß** die Vorrichtung (10), die dafür ausgelegt ist, das Werkstück (1) aus Glas zu halten, eine bewegliche Vorrichtung ist, die das Werkstück (1) aus Glas bewegen kann.

48. Anlage nach einem der Ansprüche 46 und 47, **dadurch gekennzeichnet, daß** die Vorrichtung (10), die dafür ausgelegt ist, das Werkstück aus Glas zu halten, das Werkstück (1) aus Glas in einer zur Achse des Laserstrahlenbündels (52) senkrechten Ebene bewegen kann.

49. Anlage nach einem der Ansprüche 46 bis 48, **dadurch gekennzeichnet, daß** die Vorrichtung (10), die dafür ausgelegt ist, das Werkstück (1) aus Glas zu halten, das Werkstück (1) aus Glas in Drehung versetzen kann.

50. Anlage nach Anspruch 49, **dadurch gekennzeichnet, daß** die Vorrichtung (10), die dafür ausgelegt ist, das Werkstück (1) aus Glas zu halten, das Werkstück (1) aus Glas um eine zur Achse des Laserstrahlenbündels (52) senkrechte Achse (A-A) in Drehung versetzen kann.

51. Anlage nach einem der Ansprüche 46 bis 50, **dadurch gekennzeichnet, daß** die Vorrichtung (10), die das Werkstück (1) aus Glas halten kann, so vervielfacht ist, daß eine Übertragungskette gebildet wird, die dafür ausgelegt ist, eine Vielzahl von Werkstücken aus Glas zu halten.

52. Anlage nach Anspruch 51, **dadurch gekennzeichnet, daß** die Übertragungskette eine Schrittantriebsvorrichtung ist.

53. Anlage nach einem der Ansprüche 46 bis 52, **dadurch gekennzeichnet, daß** die Übertragungskette dafür ausgelegt ist, daß Werkstücke aus Hohlglas in Drehung versetzt werden.

54. Anlage nach einem der Ansprüche 46 bis 53, **dadurch gekennzeichnet, daß** die Vorrichtung (10), die dafür ausgelegt ist, das Werkstück (1) aus Glas zu halten, durch die Steuervorrichtung gesteuert wird.

55. Anlage nach einem der Ansprüche 29 bis 54, **dadurch gekennzeichnet, daß** die Laserstrahlenbündelquelle (20) eine Quelle mit verstellbarer Leistung ist.

56. Anlage nach Anspruch 55, **dadurch gekennzeichnet, daß** die Steuervorrichtung dafür ausgelegt ist, die Leistung der Laserstrahlenbündelquelle (20) zu verstellen.

57. Anlage nach einem der Ansprüche 29 bis 56, **dadurch gekennzeichnet, daß** die Laserstrahlenbündelquelle (20) eine Quelle mit verstellbarer Stellung und/oder Ausrichtung ist.

58. Anlage nach Anspruch 57, **dadurch gekennzeichnet, daß** die Steuervorrichtung dafür ausgelegt ist, die Stellung und/oder die Ausrichtung der Laserstrahlenbündelquelle (20) zu verstellen.

59. Anlage nach einem der Ansprüche 29 bis 58, **dadurch gekennzeichnet, daß** das Führungssystem mindestens ein Ablenkorgan aufweist, das ein Laserstrahlenbündel in zwei oder mehrere abgeleitete Laserstrahlenbündel teilen kann.

## Claims

1. A method of processing a glass piece (1)so as to cut the piece along a predetermined cutting line (4) on its surface, the method including:
at least one marking step, during which a beam of laser rays focused (52) by a focusing means (32) travels along the predetermined cutting line (4), the beam (52) being substantially focused on the predetermined cutting line, and
at least one heating step, during which a beam of laser rays travels along the predetermined cutting line (4) without being focused on this line (4), the portion (61) of the surface irradiated by the laser beam straddling the predetermined cutting line (4),
wherein,
the same beam of laser rays (52) travels along the predetermined cutting line during a marking step and during a heating step, the focusing means (32) being an adjustable focusing means which, during a marking step, focuses the beam of laser rays (52) substantially on the predetermined cutting line (4) and which, during a heating step, ensures that the focal point (53) of the beam (52) is appreciably distant from the predetermined cutting line (4).

2. A method according to claim 1, wherein, during the marking step, the focused beam of laser rays (52) travels along the predetermined cutting (4) because the glass piece is moved in such a way that, at any moment, the predetermined cutting line (4) coincides substantially with the focal point (53) of the laser beam (52), and in that, during a heating step, the beam of laser rays (52) travels along the predetermined cutting line (4), because the glass piece (1) is moved in such a way that, at any moment, the portion of surface (61) irradiated by the beam (52) straddles the predetermined cutting line.

3. A method according to any one of the preceding claims, wherein the focusing means (32) comprises a convergent lens for lasers.

4. A method according to Claim 3, wherein the adjustment of the focusing of the beam is effected by a movement of the lens (32) along the axis of the beam.

5. A method according to Claim 4, wherein the movement of the lens (32) is caused and controlled by the movement of the axis of a linear electric motor (37).

6. A method according to any one of the preceding claims, wherein the beam of laser rays (52) projected onto the surface of the glass piece (1) during a marking step is a pulsed beam of laser rays.

7. A method according to Claim 6, wherein the pulsed beam of laser rays (52) projected onto the surface of the glass piece (1) during a marking step produces on this surface a succession of impact zones (60) having a diameter of less than 500 µm separated from each other by a distance of less than 2 mm.

8. A method according to Claim 7, wherein the impact zones (60) have a diameter of less than 100 µm.

9. A method according to Claim 7, wherein the impact zones (60) have a diameter of less than 50 µm.

10. A method according to any one of Claims 7 to 9, wherein the impact zones (60) are separated from each other by a distance of less than 1 mm.

11. A method according to any one of Claims 7 to 9, wherein the impact zones (60) are separated from each other by a distance of between 100 µm and 800 µm.

12. A method according to any one of Claims 7 to 11, wherein the physical characteristics of the pulsed beam of laser rays are such that the impact zones (60) are subjected to the action of the beam with a density of radiation which is sufficiently high for point defects, coinciding substantially with the predetermined cutting line (4), to appear on the surface of the glass piece (1).

13. A method according to any one of claims 1 to 5, wherein the beam of laser rays (52) projected onto the surface of the glass piece (1) during a marking step is a continuous beam of laser rays.

14. A method according to Claim 13, wherein the continuous beam of laser rays projected onto the surface of the glass piece (1) during a marking step produces on this surface a continuous impact line with a width of less than 500 µm.

15. A method according to Claim 14, wherein the continuous impact line has a width of less than 100 µm.

16. A method according to Claim 14, wherein the continuous impact line has a width of less than 50 µm.

17. A method according to any one of claims 14 to 16, wherein the physical characteristics of the continuous beam of laser rays projected onto the surface of the glass piece (1) during a marking step are such that the continuous impact line is irradiated with a density of irradiation which is sufficiently high for a crack, coinciding substantially with the predetermined cutting line, to appear on the surface of the glass piece (1).

18. A method according to any one of the preceding claims, wherein the beam of laser rays (52) projected onto the surface of the glass piece (1) during a heating step is a continuous beam of laser rays.

19. A method according to any one of claims 1 to 17, wherein the beam of laser (52) rays projected onto the surface of the glass piece (1) during heating is a pulsed beam of laser rays.

20. A method according to claim 18 or 19, wherein the beam of laser rays (52) projected onto the surface of the glass piece (1) during a heating step produces on this surface an impact line having a width of between 2 mm and 10 mm.

21. A method according to any one of claims 18 to 20, wherein the physical characteristics of the beam of laser rays (52) projected onto the surface of the glass piece (1) during a heating step and the irradiation conditions during this heating step are such that the portion of irradiated surface (61) is subjected to a density of irradiation such that the geometry of the surface is not altered but the heating of the irradiated zone creates mechanical stresses in the mass of glass in this zone.

22. A method according to any one of the preceding claims, wherein a marking step is followed by a heating step.

23. A method according to any one of claims 1 to 9, wherein the method includes successively a marking step, a heating step and a marking step.

24. A method according to any one of claims 1 to 9, wherein the method includes a heating step followed by a marking step.

25. A method according to any one of claims 1 to 9, wherein the method includes successively a heating step, a marking step and a heating step.

26. A method according to any one of the preceding claims, wherein the glass piece (1) is a piece of hollow glass, the predetermined cutting line (4) forming a closed curve.

27. A method according to Claim 26, wherein the closed curve is situated in a plane, the piece of hollow glass being rotated about an axis perpendicular to this plane, during a marking step and during a heating step.

28. A method according to any one of the preceding claims, wherein the glass piece (1) is a flat glass piece.

29. An installation for processing a glass piece so as to cut the piece along a predetermined cutting line (4) on the surface of the piece (1), the installation including:
a source (20) for a beam of laser rays;
a system for guidance (30) of the beam including a focusing means (32); and
a control station,
the installation being able to project onto the surface of the piece (1) :
in at least one marking step, a beam of laser rays (52) travelling along the predetermined cutting line (4), the beam of laser rays (52) being substantially focussed on the predetermined cutting line (4) by the focusing means,
in at least one heating step, a beam of laser rays travelling along the predetermined cutting line (4), the beam of laser rays not being focused on the cutting line (4), the portion (61) of the surface irradiated by the beam of laser rays straddling the cutting line (4),
wherein the focusing means (32) is an adjustable focusing means able to focus a beam of laser rays (52) emitted by the source of laser rays (20) on the predetermined cutting line (4) during a marking step, and able to ensure that the focal point (54) of the same beam of laser rays (52) projected onto the predetermined cutting line (4) is appreciably distant from this line (4) during a heating step.

30. An installation according to Claim 29, wherein the focusing means (32) is a convergent lens for lasers.

31. An installation according to claim 29 or 30, wherein the focusing means (32) is a movable focusing means, having during a marking step a position such that the beam of laser rays (52) is focused on the predetermined cutting line (4) and having during a heating step a position such that the focal point (53) of the beam of laser rays (52) is appreciably distant from the predetermined cutting line (4).

32. An installation according to Claim 31, wherein the guidance system (30) includes a carriage (33) on which the focusing means (32) is mounted.

33. An installation according to Claim 32, wherein the carriage (33) is able to move the focusing means (32) along the axis of the beam of laser rays (52) projected.

34. An installation according to Claim 33, further comprising a linear electric motor (37) able to move the carriage (33).

35. An installation according to any one of Claims 29 to 34, wherein the focusing means (32) is adjusted by the control station.

36. An installation according to Claim 35, wherein the focusing means (32) is a movable focusing means, having during a marking step a position such that the beam of laser rays (52) is focused on the predetermined cutting line (4) and having during a heating step a position such that the focal point (53) of the beam of laser rays (52) is appreciably distant from the predetermined cutting line (4), the control station adjusting the position of the focusing means (32).

37. An installation according to Claim 36, wherein the guidance system (30) includes a carriage (33) on which the focusing means (32) is mounted, the control station being able to adjust the position of the focusing means (32) by controlling the movement of the carriage (33).

38. An installation according to Claim 37, wherein the control station is able to control the movement of the carriage (33) in a direction parallel to the beam of laser rays (52).

39. An installation according to any one of claims 31 to 38, wherein it includes a system detecting the position of the predetermined cutting line (4) and in that the control station is able to adjust the position of the focusing means (32) according to the detected position of the predetermined cutting line (4).

40. An installation according to any one of claims 29 to 39, wherein it includes a modulation device able to adjust the frequency and the pulsation mode of the beam of laser rays.

41. An installation according to Claim 40, wherein the modulation device is controlled by the control station.

42. An installation according to any one of the preceding claims, wherein the guidance system (30) includes at least one mirror for lasers (31) able to modify the direction of the beam of laser rays.

43. An installation according to Claim 42, wherein the guidance system (30) includes at least one mirror for lasers (31) with adjustable position and/or orientation.

44. An installation according to Claim 43, wherein the control station is able to adjust the direction of the beam of laser rays by controlling the change in the position and/or orientation of at least one mirror for lasers (31).

45. An installation according to Claim 44, further comprising a system detecting the position of the predetermined cutting line (4) and in that the control station is able to adjust the position and/or orientation of at least one mirror for lasers (31), according to the detected position of the predetermined cutting line (4).

46. An installation according to any one of claims 29 to 45, further comprising a device (10) able to hold the glass piece (1) to be processed.

47. An installation according to Claim 46, wherein the device (10) able to hold the glass piece (1) is a movable device able to move the glass piece (1).

48. An installation according to claim 46 or 47, wherein the device (10) able to hold the glass piece is able to move the glass piece (1) in a plane perpendicular to the axis of the beam of laser rays (52).

49. An installation according to any one of claims 46 to 48, wherein the device (10) able to hold the glass piece (1) is able to rotate the glass piece (1).

50. An installation according to Claim 49, wherein the device (10) able to hold the glass piece (1) is able to rotate the glass piece (1) about an axis (A-A) perpendicular to the axis of the beam of laser rays (52).

51. An installation according to any one of claims 46 to 50, including multiple devices (10) able to hold the glass piece (1) so as to constitute a transfer line able to hold a multitude of glass pieces.

52. An installation according to Claim 51, wherein the transfer line is a stepper drive device.

53. An installation according to any one of claims 46 to 52, wherein the transfer line is adapted for rotating hollow glass pieces.

54. An installation according to any one of claims 46 to 53, wherein the device (10) able to hold the glass piece (1) is controlled by the control station.

55. An installation according to any one of claims 29 to 54, wherein the source (20) for a beam of laser rays is an adjustable-power source.

56. An installation according to Claim 55, wherein the control station is able to adjust the power of the source (20) for a beam of laser rays.

57. An installation according to any one of claims 29 to 56, wherein the source (20) for a beam of laser rays is a source with adjustable position and/or orientation.

58. An installation according to Claim 57, wherein the control station is able to adjust the position and/or the orientation of the source (20) for a beam of laser rays.

59. An installation according to any one of claims 29 to 58, wherein the guidance system includes a deflector able to divide a beam of laser rays into two or more deflected beams of laser rays.
